# EUROPÄISCHE PATENTSCHRIFT

(11) **EP 2 431 809 B1**
(45) Veröffentlichungstag und Bekanntmachung des Hinweises auf die Patenterteilung: **08.05.2013**
(21) Anmeldenummer: 10177636.7
(22) Anmeldetag: 20.09.2010
(51) Int. Cl.: G03G 7/00

(54) **Aufzeichnungsmaterial für elektrofotografische Druckverfahren**
Recording material for electrophotographic printing
Matériau d'enregistrement pour un procédé d'impression électrographique

(43) Veröffentlichungstag der Anmeldung: 21.03.2012
(73) Patentinhaber: Schoeller Technocell GmbH & Co. KG, 49086 Osnabrück (DE)
(72) Erfinder: Kozlowski, Dr. Christoph, 49076, Osnabrück (DE); Overberg, Dr. Andreas, 49078, Osnabrück (DE); Steinbeck, Rainer, 49088, Osnabrück (DE)
(74) Vertreter: Cohausz & Florack

(56) Entgegenhaltungen:
- US-A1- 2005 019 583
- US-A1- 2006 198 970
- US-A1- 2007 218 256

## Beschreibung

### GEBIET DER ERFINDUNG

Die Erfindung betrifft ein Aufzeichnungsmaterial, mit dem Bilder in Fotoqualität mit elektrofotografischen Druckverfahren hergestellt werden können.

### HINTERGRUND DER ERFINDUNG

Dem Laserdrucker liegt das Prinzip der Elektrofotografie zugrunde. Die Elektrofotografie erzeugt durch eine Abbildung bzw. Belichtung eines Fotoleiters mit dem optischen Abbild einer Vorlage ein latentes Bild aus elektrischen Ladungen, welches nachfolgend dazu benutzt wird, selektiv einen Toner aufzutragen (Entwicklung) und ein Abbild (Kopie) der Vorlage, beispielsweise auf Papier, zu erzeugen. Man unterscheidet direkte und indirekte sowie nasse und trockene Elektrofotografie. Die Nassverfahren, auch Flüssigtonerverfahren genannt, nutzen als Entwickler eine Suspension aus einem aliphatischen Lösungsmittel mit geringer Dielektrizitätskonstante und dem Toner, während das Trockenverfahren ein Pulver verwendet. Mit Hilfe eines gebündelten Laserstrahles und eines rotierenden Spiegels wird auf die lichtempfindliche Bildtrommel ein Abbild der gewünschten Seite gezeichnet. Die Trommel ist zunächst negativ aufgeladen, wobei die Ladung an den Stellen wieder aufgehoben wird, auf die der Laserstrahl trifft. Die Form der entladenen Flächen auf der Trommel entspricht dem späteren Ausdruck. Über eine Rolle mit negativ geladenem Toner, der an den entladenen Stellen auf der Bildtrommel haften bleibt wird der Toner auf die Trommel gebracht.

Beim Trockentonerverfahren wird das Papier anschließend über die Bildtrommel geführt. Es streift nur an der Trommel vorbei. Hinter dem Papier wird ein Potenzialfeld aufgebaut. Der Toner wird auf das Papier übertragen und ist dort zunächst lose. Anschließend wird der Toner mit Hilfe einer heißen Walze und unter Druck fixiert. Die Trommel wird entladen und überflüssiger Toner von ihr entfernt.

Bei dem Flüssigtonerverfahren wird die Tonersuspension zunächst auf einen beheizten Gummizylinder übertragen, auf dem die Trägerflüssigkeit verdampft und der Toner plastifiziert wird. Von dieser Zwischenwalze (Intermediate drum) wird das Tonerbild dann auf das Aufzeichnungsblatt übertragen.

Die mit Hilfe eines Laser-Druckers erzeugten Bilder sollten eine mit einem Foto vergleichbare Qualität erreichen. Hierzu gehören Eigenschaften wie Glanz, Steifigkeit und Opazität, eine hohe Auflösung und Bildschärfe sowie eine gute Lichtbeständigkeit.

In der Publikation von HP (Hannelore Breuer): Das know-how des Druckens: Die neuen Laser-Papiere von HP (erstellt am 13. 05. 2005, erhalten unter
h41131.www4.hp.com/Backgrounder_Neue_Laser-Papiere.pdf
(Stand vom 31.08.2010) werden mehrlagig beschichtete Papiere mit beidseitig "offener" poröser Oberfläche beschrieben. Unter Verwendung solche Papiere hergestellte Bilder weisen aber eine von herkömmlichen Silberhalogenidbildern deutlich unterschiedliche Haptik und ein unterschiedlicher Glanz der Oberfläche.

Um dem Ziel einer fotoähnlichen Qualität näher zu kommen, werden elektrofotografisch erzeugte Bilder auf Trägermaterialien produziert, die die Haptik und das Aussehen eines typischen Silbersalz-Fotos aufweisen. In der DE 44 35 350 C1 ist ein Bildempfangsmaterial für die Elektrofotografie beschrieben, das ein mit Thermoplasten beschichtetes Basispapier und eine Toner-Empfangsschicht sowie eine antistatische Rückseitenschicht umfasst. Nachteilig an diesem Material ist, dass es hinsichtlich der Tonerfixierung und des Verhaltens im Drucker noch verbesserungsbedürftig ist. Des Weiteren zeigen solche Materialien nach dem Druck eines Bildes störende glänzende Flecken, die von den in den Tonerformulierungen häufig als Trennmittel eingesetzten ölartigen Substanzen herrühren.

US 2005/0019583 A1 beschreibt ein Aufzeichnungsmaterial für elektrofotografische Druckverfahren, umfassend einen Träger und eine toneraufnehmende Schicht, die aus einer wasserdispergierbaren Emulsion mit einer durchschnittlichen Partikelgröße von mehr als 55 nm und einem wasserlöslichen Polymer mit einem mittleren Molekulargewicht von 400.000 oder weniger gebildet wird. Durch diese Merkmale soll die Beschichtungsflüssigkeit des Aufzeichnungsmaterials gute Filmbildungseigenschaften und eine hohe Stabilität aufweisen sowie ein mögliches Ausflocken verhindern.

US 2007/0218256 A1 beschreibt ein Bildaufzeichnungsblatt umfassend einen Träger, eine leitenden Unterschicht, die aus ein Metalloxid und Harz als Bindemittel enthält, und mindestens eine Bildaufnahmeschicht auf der leitenden Unterschicht.

Die Bildaufnahmeschicht enthält ein Weißpigment und feintaeilige Partikel und die Lichtdurchlässigkeit ist 75 % oder weniger.

US 2006/0198970 A1 bezieht sich auf einen Träger für ein Aufzeichnungsmedium, der ein Grundpapier mit einem metallischen Verbindung enthält sowie mindestens eine Polymerschicht auf der Bildseite und mindestens eine Polymerschicht auf der Rückseite, wobei mindestens eine der Polymerschichten ein polymeres antistatisches Mittel enthält.

### ZUSAMMENFASSUNG DER ERFINDUNG

Es ist daher Aufgabe der Erfindung, ein Aufzeichnungsmaterial bereit zu stellen, welches beidseitig bedruckbar ist, eine gute Bildqualität, eine gute Licht- und Ozonresistenz bei Lagerung sowie ein gutes Einzugs- und Transport-Verhalten im Drucker und eine gute Stapelfähigkeit aufweist.

Gelöst wird diese Aufgabe durch ein Aufzeichnungsmaterial für elektrofotografische Druckverfahren, enthaltend ein beidseitig mit Kunstharz beschichtetes Rohpapier und mindestens eine auf einer Kunstharzschicht angeordnete toneraufnehmende Schicht, wobei die toneraufnehmende Schicht einen wasserlöslichen oder wasserdispergierbaren Binder, ein feinteiliges anorganisches Pigment und eine antistatisch wirkende Komponente enthält, wobei das feinteilige Pigment eine mittlere Teilchengröße von 10 nm bis 200 nm und eine BET-Oberfläche von 10 m²/g bis 400 m²/g aufweist.

Vorzugsweise hat das kunstharzbeschichtete Papier eine spezifische Oberflächentopografie, ausgedrückt durch einen Rauhigkeitswert Rz von 0,03 bis 15 µm. Die toneraufnehmende Schicht kann ein Gemisch eines toneraufnehmenden Ethylen-Acrylsäure-Copolymers, eines feinteiligen, ölabsorbierenden Pigments und einer elektrisch leitfähige Substanz enthalten, wobei die elektrisch leitfähige Substanz ein elektrisch leitfähiges feinteiliges Oxid oder ein elektrisch leitfähiges Polymer ist.

### DETAILLIERTE BESCHREIBUNG DER ERFINDUNG

Für die Zwecke der Erfindung versteht man unter dem Begriff Rohpapier ein unbeschichtetes oder oberflächengeleimtes Papier. Ein Rohpapier kann neben Zellstofffasern, Leimungsmittel wie Alkylkentendimere, Fettsäuren und/oder Fettsäuresalze, epoxydierte Fettsäureamide, Alkenyl- oder Alkylbernsteinsäureanhydrid, Nassfestmittel wie Polyamin-Polyamid-Epichlorhydrin, Trockenfestmittel wie anionische, kationische oder amphotere Polyamide oder kationische Stärken, optische Aufheller, Füllstoffe, Pigmente, Farbstoffe, Entschäumer und weitere in der Papierindustrie bekannte Hilfsmittel enthalten kann. Das Rohpapier kann oberflächengeleimt sein. Hierzu geeignete Leimmittel sind beispielsweise Polyvinylalkohol oder oxydierte Stärke. Das Rohpapier kann auf einer Fourdrinier- oder einer Yankee-Papiermaschine(Zylinder-Papiermaschine) hergestellt werden. Das Flächengewicht des Rohpapiers kann 50 bis 250 g/m², insbesondere 80 bis 180 g/m², betragen. Das Rohpapier kann in unverdichteter oder verdichteter Form (geglättet) eingesetzt werden. Besonders gut geeignet sind Rohpapiere mit einer Dichte von 0,8 bis 1,2 g/cm³, insbesondere 0,90 bis 1,1 g/cm³. Als Zellstofffasern können beispielsweise gebleichter Hartholz-Kraftzellstoff (LBKP), gebleichter Nadelholz-Kraftzellstoff (NBKP), gebleichter Laubholzsulfitzellstoff (LBSP) oder gebleichter Nadelholzsulfitzellstoff (NBSP) eingesetzt werden. Es können auch aus Papierabfällen gewonnene Zellstofffasern verwendet werden. Die genannten Zellstofffasern können auch gemischt eingesetzt werden und Anteile anderer Fasern, zum Beispiel von Kunstharzfasern, zugemischt werden. Bevorzugt jedoch werden Zellstofffasern aus 100% Laubholzzellstoff eingesetzt. Die mittlere Faserlänge des ungemahlenen Zellstoffs beträgt vorzugsweise 0,6 bis 0,85 mm (Kajaani-Messung). Ferner weist der Zellstoff einen Ligningehalt von weniger als 0,05 Gew.-% auf, insbesondere 0,01 bis 0,03 Gew.-%, bezogen auf die Masse des Zellstoffs.

Als Füllstoff können beispielsweise Kaoline, Calciumcarbonat in seinen natürlichen Formen wie Kalkstein, Marmor oder Dolomitstein, gefälltes Calciumcarbonat, Calciumsulfat, Bariumsulfat, Titaniumdioxid, Talkum, Silica, Aluminiumoxid und deren Gemische im Rohpapier eingesetzt werden. Besonders geeignet ist Calciumcarbonat mit einer Korngrößenverteilung, bei der mindestens 60 % der Teilchen kleiner sind als 2 µm und höchstens 40 % kleiner sind als 1 µm. In einer besonderen Ausgestaltung der Erfindung wird Calcit mit einer Korngrößenverteilung eingesetzt, bei der etwa 25 % der Teilchen eine Teilchengröße von weniger als 1 µm und etwa 85 % der Teilchen eine Teilchengröße von weniger als 2 µm aufweisen.

In einer Ausführungsform der Erfindung kann zwischen dem Rohpapier und der Kunstharzschicht eine pigmenthaltige Schicht angeordnet sein. Das Pigment kann ein Metalloxid, Silikat, Carbonat, Sulfid oder Sulfat sein. Besonders gut geeignet sind Pigmente wie Kaoline, Talkum, Calciumcarbonat und/oder Bariumsulfat. Besonders bevorzugt ist ein Pigment mit einer engen Korngrößenverteilung, bei der mindestens 70% der Pigmentpartikeln eine Größe von kleiner als 1µm aufweisen. Der Anteil des Pigments mit der engen Korngrößenverteilung an der gesamten Pigmentmenge beträgt mindestens 5 Gew.-%, insbesondere 10 bis 90 Gew.-%. Besonders gute Ergebnisse sind mit einem Anteil von 30 bis 80 Gew.-% des Gesamtpigments zu erreichen. Unter einem Pigment mit einer engen Korngrößenverteilung werden erfindungsgemäß auch Pigmente mit einer Korngrö-βenverteilung verstanden, bei der mindestens etwa 70 Gew.-% der Pigmentpartikel eine Größe von kleiner als etwa 1 µm aufweist und bei 40 bis 80 Gew.-% dieser Pigmentpartikeln die Differenz zwischen dem Pigment mit der größten Korngröße (Durchmesser) und dem Pigment der kleinsten Korngröße kleiner als etwa 0,4 µm ist. Als besonders vorteilhaft erwies sich ein Calciumcarbonat mit einem d50%-Wert von etwa 0,7 µm.

In einer besonderen Ausführungsform der Erfindung kann in der pigmenthaltigen Schicht eine Pigmentmischung eingesetzt werden, die aus dem oben genannten Calciumcarbonat und Kaolin besteht. Das Mengenverhältnis Calciumcarbonat/Kaolin beträgt vorzugsweise 30:70 bis 70:30. Das Mengenverhältnis Bindemittel/Pigment in der pigmenthaltigen Schicht kann 0,1 bis 2,5, vorzugsweise 0,2 bis 1,5, insbesondere jedoch etwa 0,9 bis 1,3 betragen. In der pigmenthaltigen Schicht kann jedes bekannte wasserlösliche und/oder wasserdispergierbare Bindemittel eingesetzt werden. Besonders geeignet sind hierzu neben Latexbindern filmbildende Stärken wie thermisch modifizierte Stärken, insbesondere Maisstärken oder hydroxypropylierte Stärken. Die pigmenthaltige Schicht kann mit allen in der Papierherstellung üblichen Auftragsaggregaten inline oder offline aufgebracht werden, wobei die Menge so gewählt wird, dass nach dem Trocknen das Auftragsgewicht 0,1 bis 30 g/m², insbesondere 1 bis 20 g/m², oder gemäß einer besonders bevorzugten Ausführungsform 2 bis 8 g/m² beträgt. In einer bevorzugten Ausführungsform wird die pigmenthaltige Schicht mit einer innerhalb der Papiermaschine integrierten Leimpresse oder Filmpresse aufgetragen.

Die auf beiden Seiten des Rohpapiers angeordneten Kunstharzschichten (vorderseitige und rückseitige Kunstharzschicht) können vorzugsweise ein thermoplastisches Polymer enthalten. Insbesondere geeignet hierfür sind Polyolefine, beispielsweise Polyethylen niedriger Dichte (LDPE), Polyethylen hoher Dichte (HDPE), Polypropylen, 4-Methylpenten-1 und deren Gemische sowie Polyester, beispielsweise Polycarbonate. In einer besonderen Ausgestaltung der Erfindung ist das thermoplastische Polymer ein biologisch abbaubares Polymer und/oder ein Polymer auf Basis nachwachsender Rohstoffe wie zum Beispiel ein linearer Polyester, thermoplastische modifizierte Stärke, oder Polymilchsäure oder eine Mischung dieser Polymere untereinander oder mit anderen Polymeren.

In einer weiteren besonders bevorzugten Ausgestaltung der Erfindung enthält die vorderseitige und rückseitige Kunstharzschicht mindestens 40 Gew.-% HDPE mit einer Dichte von mehr als 0,95 g/cm³, insbesondere 60 bis 80 Gew.-%. Besonders bevorzugt ist eine Zusammensetzung, die aus 65 Gew.-% HDPE mit einer Dichte von mehr als 0,95 g/cm³ und 35 Gew.-% LDPE mit einer Dichte von weniger als 0,935 g/cm³ besteht.

Die Kunstharzschichten können Weißpigmente wie Titandioxid sowie weitere Hilfsstoffe wie optische Aufheller, Farbstoffe und Dispergierhilfsmittel enthalten. In einer besonderen Ausgestaltungsform der Erfindung werden antistatisch wirkender Substanzen, insbesondere elektrisch leitfähige anorganischer Pigmente, zu den Kunstharzschichten zugefügt.

Das Auftragsgewicht der Kunstharzschichten kann 5 bis 50 g/m², insbesondere 5 bis 30 g/m², bevorzugt jedoch 10 bis 20 g/m² betragen. Die Kunstharzschicht kann auf das Rohpapier oder die pigmenthaltige Schicht einschichtig extrudiert oder mehrschichtig coextrudiert werden. Die Extrusionsbeschichtung kann mit Maschinengeschwindigkeiten bis 600 m/min erfolgen.

Die Oberflächenstruktur (Topografie) der Kunstharzschichten wird mit Hilfe von den bei der Extrusionsbeschichtung eingesetzten Kühlzylindern erzeugt. Sie lässt sich durch Rauhigkeitswerte charakterisieren. Die zur Erzeugung der Oberflächenstruktur verwendeten Kühlzylinder werden auf bekannte Weise hergestellt. Hierzu kann die Oberfläche eines Stahlzylinders durch Strahlen mit Sand, Glas oder anderem Strahlgut behandelt und anschließend verchromt werden. Die Oberfläche des Zylinders kann aber auch in einem Chrombad elektrolytisch aufgebaut worden sein.

Die Kunstharzschichten können in einer Ausgestaltungsform der Erfindung symmetrisch auf beiden Seiten des Rohpapiers aufgetragen werden, d.h. die Kunstharzschichten auf beiden Seiten des Rohpapiers weisen dieselbe Zusammensetzung auf und sind hinsichtlich der Oberflächentopografie identisch. Erfindungsgemäß kann die Oberfläche der Kunstharzschicht auf beiden Seiten Rauhigkeitswerte Rz von 0,03 bis 15 µm aufweisen.

In einer bevorzugten Ausführungsform der Erfindung, die ein Aufzeichnungsmaterial mit einer glänzenden Oberfläche, die einem glänzenden Silberhalogenid-Foto gleicht, zum Ziel hat, weist die Oberfläche der Kunstharzschicht auf mindestens einer Seite einen Rauhigkeitswert Rz von 0,03 bis 1,8 µm auf. In einer weiteren bevorzugten Ausführungsform der Erfindung, die ein Aufzeichnungsmaterial mit einer strukturierten Oberfläche, die einem matten Silberhalogenid-Foto gleicht, zum Ziel hat, weist die Oberfläche der Kunstharzschicht auf mindestens einer Seite einen Rauhigkeitswert Rz von 9 bis 15 µm auf.

In einer weiteren bevorzugten Ausgestaltungsform der Erfindung, die ein einseitig bedruckbares glänzendes Aufzeichnungsmaterial zum Ziel hat, hat die Kunstharzschicht auf derjenigen Seite des Aufzeichnungsmaterials, die die toneraufnehmende Schicht trägt und die für das Bedrucken vorgesehen ist, eine geringere Rauhigkeit als die auf der Rückseite. In dieser Ausgestaltungsform weist die für die Bedruckung vorgesehene Seite Rauhigkeitswerte Rz von 0,03 bis 1,8 µm oder von 9 bis 15 µm auf, während die nicht zur Bedruckung vorgesehene Seite Rauhigkeitswerte Rz von 12 bis 16 µm aufweist.

Auf die für die Bedruckung vorgesehene Seite des kunstharzbeschichteten Rohpapiers wird erfindungsgemäß eine toneraufnehmende Schicht aufgetragen. In der besonderen Ausgestaltungsform der Erfindung, die ein beidseitig bedruckbares Auszeichnungsmaterial zum Ziel hat, wird die tonerausnehmende Schicht auf beiden Seiten des kunstharzbeschichteten Rohpapieres aufgetragen.

Die erfindungsgemäße toneraufnehmende Schicht besteht mindestens aus einem wasserlöslichen oder wasserdispergiertem Binder, einem feinteiligen Pigment und einem und ein antistatischen Mittel.

Der Binder in der toneraufnehmenden Schicht kann jeder für Papierbeschichtungen gebräuchliche Binder sein, bevorzugt werden Stärke, Polyvinylalkohol, Acrylate oder Copolymere von Acrylaten mit anderen Monomeren verwendet. Besonders bevorzugte Binder sind Ethylenacrylsäure-Copolymere, insbesondere solche mit einem Schmelzbereich von 70 bis 100°C auf.

Das feinteilige Pigment in der toneraufnehmenden Schicht ist erfindungsgemäß ein feinteiliges anorganisches Pigment, beispielsweise Siliciumdioxid, Aluminiumoxid, Aluminiumoxidhydrat, Aluminiumsilicat, Calciumcarbonat, Zinkoxid, Zinnoxid, Antimonoxid, Titandioxid Indiumoxid oder ein Mischoxid dieser Oxide. In einer besonderen bevorzugten Ausführungsform ist das feinteilige Pigment Zinkoxid, Zinnoxid, Antimonoxid, Titandioxid Indiumoxid oder ein Mischoxid dieser Oxide. Die feinteiligen Pigmente können einzeln oder als Mischungen in der toneraufnehmenden Schicht vorhanden sein.

Bevorzugt werden insbesondere Pigmente mit einer BET-Oberfläche von 30 m²/g bis 400m²/g. Erfindungsgemäße Pigmente können durch das Flammenverfahren oder durch nasschemische Fällungsverfahren erhalten werden.

Das antistatische Mittel in der toneraufnehmenden Schicht kann erfindungsgemäß ein elektrisch leitfähiges Polymer oder ein elektrisch leitfähiges Pigment sein. Es können auch Mischungen von antistatischen Mittel verwendet werden.

Erfindungsgemäße elektrisch leitfähige Polymere können solche sein, bei denen die elektrische Ladung in Form von Ionen transportiert wird, wie Polystryolsulfonsäure. Bevorzugt werden aber Polymere, in den die elektrische Ladung in Form von Elektronen oder Defektelektronen transportiert werden, beispielsweise Polyaniline, Polythiophene oder andere. Besonders bevorzugt ist als leitfähiges Polymer mit Polystyrolsäure dotiertes Poly(3,4-ethylen-dioxythiophen) (PEDOT:PSS), welches zum Beispiel unter den Namen CLEVIOS^{®} oder ORGACON^{®} erhältlich ist. Die elektrisch leitfähigen Polymere sind erfindungsgemäß in einer Menge von 0,1 bis 50 Gew.-%, insbesondere 1,0 bis 4,0 Gew.-%, bezogen auf die Masse getrocknete Schicht, in der toneraufnehmenden Schicht enthalten. Wird erfindungsgemäß ein Polymer als antistatisches Mittel in der toneraufnehmenden Schicht eingesetzt, kann dieses in einer besonderen Ausgestaltung der Erfindung den wasserlöslichen oder wasserdispergierten Binder ganz oder teilweise ersetzten.

Erfindungsgemäße leitfähige Pigmente können unter anderem aus Metallpulver oder Kohlenstoff bestehen. Bevorzugt werden jedoch Oxide wie Antimonoxid, Zinnoxid, Indiumoxid oder besonders bevorzugt Titandioxid oder Zinkoxid oder Mischoxide der Elemente Antimon, Indium, Titan, Zink oder Zinn. Die erfindungsgemäßen leitfähigen Pigmente weisen vorzugsweise eine mittlere Partikelgröße von kleiner als 1000 nm, besonders bevorzugt kleiner als 200 nm auf. Wird ein leitfähiges Pigment als antistatisches Mittel einsetzt, kann dieses in einer bevorzugten Ausführungsform der Erfindung auch gleichzeitig das feinteilige Pigment der toneraufnehmenden Schicht darstellen.

In einer weiteren Ausgestaltung der Erfindung enthält die toneraufnehmende Schicht zusätzlich anionische oder nichtionische oberflächenaktive Mittel in einer Menge von 0,01 bis 4,0 Gew.-%, insbesondere 0,05 bis 2,5 Gew.-%, bezogen auf die getrocknete Schicht.

Die toneraufnehmende Schicht kann gegebenenfalls auch weitere Hilfsmittel enthalten, beispielsweise Mattierungsmittel, Farbstoffe, Vernetzungsmittel, Gleitmittel, Anti-Blocking-Mittel und andere übliche Additive.

Die Beschichtungsmasse zur Bildung der toneraufnehmenden Schicht kann mit allen in der Papierherstellung üblichen Auftragsaggregaten inline oder offline aufgebracht werden, wobei die Menge so gewählt wird, dass nach dem Trocknen das Auftragsgewicht höchstens 3 g/m², insbesondere 0,1 bis 2 g/m², oder gemäß einer besonders bevorzugten Ausführungsform 0,3 bis 0,7 g/m² beträgt. Die Beschichtungsmasse kann als Strich mit Hilfe eines üblichen, innerhalb der Extrusionsbeschichtungsanlage integrierten Auftragswerkes aufgetragen werden. Hierzu besonders gut geeignet ist beispielsweise ein 3-Walzenauftrag oder eine Rakelvorrichtung.

In einer weiteren Ausgestaltung der Erfindung können auf die toneraufnehmende Schicht weitere Schichten wie Schutzschichten oder glanzverbessernde Schichten aufgetragen werden. Das Auftragsgewicht solcher Schichten ist vorzugsweise kleiner als 1 g/m2.

Die folgenden Beispiele dienen der weiteren Erläuterung der Erfindung.

### BEISPIELE

Ein Rohpapier A wurde aus Eukalyptus-Zellstoff hergestellt. Zur Mahlung wurde der Zellstoff als etwa 5 %ige wässrige Suspension (Dickstoff) mit Hilfe eines Refiners auf einen Mahlgrad von 36 °SR gemahlen. Die mittlere Faserlänge betrug 0,64 mm. Die Konzentration der Zellstofffasern im Dünnstoff betrug 1 Gew.-%, bezogen auf die Masse der Zellstoffsuspension. Dem Dünnstoff wurden Zusatzstoffe zugesetzt wie kationische Stärke in einer Menge von 0,4 Gew.-%, als ein neutrales Leimungsmittel Alkylketendimer (AKD)in einer Menge von 0,48 Gew.-%, Nassfestmittel Polyamin-Polyamid-Epichlorhydrinharz (Kymene^{®}) in einer Menge von 0,36 Gew.-% und ein natürliches CaCO₃ in einer Menge von 10 Gew.-%. Die Mengenangaben beziehen sich auf die Zellstoffmasse. Der Dünnstoff, dessen pH-Wert auf etwa 7,5 eingestellt wurde, wurde vom Stoffauflauf auf das Sieb der Papiermaschine gebracht, worauf die Blattbildung unter Entwässerung der Bahn in der Siebpartie der Papiermaschine erfolgte. In der Pressenpartie erfolgte die weitere Entwässerung der Papierbahn auf einen Wassergehalt von 60 Gew.-%, bezogen auf das Bahngewicht. Die weitere Trocknung erfolgte in der Trockenpartie der Papiermaschine mit beheizten Trockenzylindern. Es entstand ein Rohpapier mit einem Flächengewicht von 160 g/m² und einer Feuchte von etwa 7%.

Das Rohpapier wird auf beiden Seiten mit einer Streichmasse aus einem Styrolacrylat-Binder, Stärke und einer Pigmentmischung aus Calciumcarbonat und Kaolin mit einem Auftragsgewicht von je 15 g/m² auf beiden Seiten gestrichen, getrocknet und anschließend mit einem Kalander geglättet. Das so erhaltene Material wird im Folgenden als Rohpapier A bezeichnet

Das Rohpapier B wurde in gleicher Weise wie Rohpapier A aus Eukalyptus-Zellstoff hergestellt. Es enthält aber in der Zellstoffdispersion zusätzlich Titandioxid in einer Menge, dass die Rohpapierbahn nach Fertigstellung 10 Gew.-% TiO₂, bezogen auf Trockenmasse enthielt. Dieses Rohpapier B wurde direkt, ohne Aufbringen einer weiteren Streichmasse, für die nachfolgende Extrusionsbeschichtung eingesetzt.

Beide Seiten der Rohpapiere A und B wurden mit einem Polyethylen-Titandioxidmischung aus 20 Gew.-% eines Polyethylens niedriger Dichte (LDPE, 0,923 g/cm³), 70 Gew.-% eines Polyethylens hoher Dichte (HDPE, d=0,964 g/cm³), 10 Gew.-% Titandioxid (Rutil) mit einem Auftragsgewicht von etwa 20 g/m² im Laminator bei einer Geschwindigkeit von etwa 250 m/min beschichtet. Die Kühlzylinder wurden so gewählt, dass die resultierenden Oberflächen beider Seiten eine Rauhigkeit von 0,9 µm aufweisen, gemessen als Rz-Wert nach DIN 4768. Die erhaltenen Materialien werden im Folgenden mit A1 und B1 bezeichnet, sie zeigen beidseitig eine hochglänzende Oberfläche.

In gleicher Weise wurden die Basispapiere A und B mit der gleichen Polyethylen-Titandioxidmischung extrusionsbeschichtet, wobei die Kühlzylinder aber so gewählt wurden, dass die resultierenden Oberflächen der Seite, die für die spätere Bedruckung vorgesehen ist, eine Rauhigkeit Rz von 11,2 µm aufweist. Für die nicht zur Bedruckung vorgesehene Seite wurde ein Kühlzylinder so gewählt, der dieser Seite eine Rauhigkeit Rz von 14,1 µm verleiht. Die erhaltenen Materialien werden im Folgenden mit A2 und B2 bezeichnet, sie zeigen auf der für die Bedruckung vorgesehene Seite eine matt strukturierte Oberfläche.

Beide Oberflächen der harzbeschichteten Papiere A1 und B1 und die für die Bedruckung vorgesehene Oberfläche der harzbeschichteten Papiere A2 und B2 wurden nach Bestrahlung mit einer Corona-Entladung mit Streichmasse beschichtet und getrocknet. Die Auftragsmenge der Streichmasse wurde so dabei gewählt, dass sich ein Trockenauftrag von 0,5 g/m² ergibt. Die Zusammensetzung der Streichmassen ist nachfolgend angegeben.

### Streichmasse a (Vergleich)

Zu 27,9 g einer Ethylenacrylat-Dispersion MICHEM PRIME^{®} 4990 R.E. (erhältlich von der Firma Michelman, Belgien) mit einem Polymergehalt von 35,7 Gew.-% wurden 0,1 g Netzmittel SURFY-NOL^{®} 440 (erhältlich von Air Products, Niederlande) und 72 g Wasser gemischt.

### Streichmasse b (Erfindung)

22,4 g Ethylenacrylat-Dispersion MICHEM PRIME^{®} 4990 R.E. wurden mit 9,8 g Dispersion eines feinteiligen leitfähigen Pigments (Antimondotiertes Zinnoxid FS-10D, Feststoffgehalt 20,5 %, Hersteller ISK ISHIHARA SANGYO KAISHA Ltd., Japan) 0,1 g Netzmittel SUPFYNOL^{®} 440 und 67,7 g Wasser gemischt.

### Streichmasse c (Erfindung)

Es wurde eine Dispersion von 3,0 g eines leitfähigen Pigments (Antimondotiertes Titan-Zinnoxid FT-2000, Hersteller ISK ISHIHARA SANGYO KAISHA Ltd., Japan) in 27 g Wasser hergestellt und mittels eines Rotor-Stator-Mischsystems (ULTRA-TURRAX^{®} der Firma IKA^{®}, Deutschland) so lange behandelt, bis die mittlere Teilchengröße des Pigments 180 nm beträgt. 22,4 g Ethylenacrylat-Dispersion MICHEM PRIME^{®} 4990 R.E. wurden mit der so hergestellten Dispersion, 0,1 g Netzmittel SURFYNOL^{®} 440 und 47,5 g Wasser gemischt.

### Streichmasse d (Vergleich)

2 g Polyvinylalkohol (Mowiol^{®} 40-88, erhältlich von Kuraray Specialities GmbH Europe, Deutschland) wurden mit 60 g einer Dispersion von AEROXIDE^{®} ALU C (Hersteller Evonik Degussa AG, Deutschland) mit einem Feststoffgehalt von 30 Gew.-%, 0,1 g Netzmittel SURFYNOL^{®} 440 und 37,9 g Wasser gemischt.

### Streichmassee (Erfindung)

16,3 g Ethylenacrylat-Dispersion MICHEM PRIME^{®} 4990 R.E. wurden mit 29,0 g einer Dispersion von AEROSIL^{®} 300 (Hersteller Evonik Degussa AG, Deutschland) mit einem Feststoffgehalt von 20 Gew.-%, 3 g einer Dispersion von Polystyrolsulfonsäure (VERSA^{®} TL 130, Hersteller Akzo Nobel Surface Chemistry AB, Schweden, Polymergehalt 30 Gew.-%), 0,1 g Netzmittel SURFY-NOL^{®} 440 und 51,6 g Wasser gemischt.

### Streichmasse f (Erfindung)

13,3 g Ethylenacrylat-Dispersion MICHEM PRIME^{®} 4990 R.E. wurden mit 29,0 g einer Dispersion von AEROSIL^{®} 300 (Hersteller Evonik Degussa AG, Deutschland) mit einem Feststoffgehalt von 20 Gew.-%, 38,5 g einer Dispersion von PEDOT:PSS (CLEVIOS^{®} P, Hersteller H.C. Strack CLEVIOS GmbH, Deutschland, Polymergehalt 1,3 Gew.-%), 0,1 g Netzmittel SURFYNOL^{®} 440, 5 g Diethylenglykol, 2 g Acrylcopolymerdispersion GLASCOL^{®} LE 520, und 12,1 g Wasser gemischt.

Die so erhaltenen Aufzeichnungsmaterialien wurden den nachstehend beschriebenen Prüfungen unterzogen.

### Oberflächenwiderstand

Gemessen mit einer Kammelektrode nach DIN 53483, Angabe in log(Ohm/cm)

Verklebungstest: Zwei Blätter des Trägermaterials in DIN-A4-Größe werden bei 23°C und 50% RF aufeinandergelegt und mit einem 10 kg-Gewicht belastet. Nach 65 Stunden werden die Blätter manuell getrennt und das Haften / Verkleben bewertet.
+: Keine Verklebung,
o: leichte Verklebung,
-: starke Verklebung

Tonerhaftung: Die Aufzeichnungsmaterialien werden mit einem elektrofotografischen Drucker vom Typ HP^{®} Indigo^{®} 6000 bedruckt und bei 23°C / 50% RF die Haftung des Toners durch Aufkleben und Widerabziehen eines Klebestreifens der Sorte TESA 4104 beurteilt.
+: Tonerschicht bleibt unbeschädigt, o: Tonerschicht etwas abgerissen,
-: Tonerschicht vollständig vom Träger abgerissen.

Visuelle Beurteilung des Drucks auf Glanzstellen: Die Aufzeichnungsmaterialien werden einem elektrofotografischen Drucker vom Typ HP^{®} Indigo^{®} 6000 und das Druckbild visuell beurteilt.
+: keine Glanzstellen,
- Glanzstellen erkennbar.

Die Prüfergebnisse sind in nachfolgender Tabelle 1 zusammengefasst.

**Tabelle 1**

| Aufzeichnungsmaterial | | Oberflächenwiderstand | Verklebungstest | Tonerhaftung | Glanzstellen |
|---|---|---|---|---|---|
| A1a | Vergleich | > 14,9 | ○ | ○ | - |
| A1b | Erfindung | 12,1 | + | + | + |
| A1c | Erfindung | 7, 6 | + | + | + |
| A1d | Vergleich | > 14,9 | + | - | + |
| A1e | Erfindung | 12, 6 | + | + | + |
| A1f | Erfindung | 8, 6 | + | + | + |
| B1a | Vergleich | > 14,9 | ○ | ○ | - |
| B1b | Erfindung | 12,0 | + | + | + |
| B1c | Erfindung | 7, 6 | + | + | + |
| B1d | Vergleich | > 14,9 | + | - | + |
| B1e | Erfindung | 12,5 | + | + | + |
| B1f | Erfindung | 8,5 | + | + | + |
| A2a* | Vergleich | > 14,9 | ○ | ○ | - |
| A2b* | Erfindung | 12,1 | + | + | + |
| A2c* | Erfindung | 7,5 | + | + | + |
| A2d* | Vergleich | > 14,9 | + | - | + |
| A2e* | Erfindung | 12,5 | + | + | + |
| A2f* | Erfindung | 8, 6 | + | + | + |
| B2a* | Vergleich | > 14,9 | ○ | ○ | - |
| B2b* | Erfindung | 12,0 | + | + | + |
| B2c* | Erfindung | 7,7 | + | + | + |
| B2d* | Vergleich | > 14,9 | + | - | + |
| B2e* | Erfindung | 12,3 | + | + | + |
| B2f* | Erfindung | 8, 4 | + | + | + |

| | | | | | |
|---|---|---|---|---|---|
| *Bei den beidseitig für eine Bedruckung vorgesehenen Aufzeichnungsmaterialien waren die Prüfergebnisse für beide Seiten im Wesentlichen identisch, angegeben ist der Mittelwert für beide Seiten. | | | | | |

Zusätzlich wurden Druckversuche mit den mit Trockentonern arbeitenden Druckern IGen^{®} 3 von XEROX^{®} und NeXpress^{®} von Kodak^{®} durchgeführt.

In der folgenden Tabelle 2 sind die Prüfergebnisse (Mittelwerte für die 3 Drucker) dargestellt. Der Tonerübertrag auf das Auszeichnungsblatt wurde dabei visuell aufgrund der Gleichmäßigkeit von homogen gedruckten Farbflächen bewertet, wobei "+" für gute Gleichmäßigkeit, "o" für leichte Dichteschwankungen und "-" für starke Dichteschwankungen im Druckbild steht.

| Aufzeichnungsmaterial | | Tonerubertrag | Toneraftung | Glanzstellen |
|---|---|---|---|---|
| A1a | Vergleich | - | ○ | - |
| A1b | Erfindung | ○ | + | + |
| A1c | Erfindung | + | + | + |
| A1d | Vergleich | - | - | + |
| A1e | Erfindung | ○ | + | + |
| A1f | Erfindung | + | + | + |
| B1a | Vergleich | - | ○ | - |
| B1b | Erfindung | + | + | + |
| B1c | Erfindung | + | + | + |
| B1d | Vergleich | - | - | + |
| B1e | Erfindung | ○ | + | + |
| B1f | Erfindung | + | + | + |
| A2a* | Vergleich | - | ○ | - |
| A2b* | Erfindung | ○ | + | + |
| A2c* | Erfindung | + | + | + |
| A2d* | Vergleich | - | - | + |
| A2e* | Erfindung | ○ | + | + |
| A2f* | Erfindung | + | + | + |
| B2a* | Vergleich | - | ○ | - |
| B2b* | Erfindung | + | + | + |
| B2c* | Erfindung | + | + | + |
| B2d* | Vergleich | - | - | + |
| B2e* | Erfindung | ○ | + | + |
| B2f* | Erfindung | + | + | + |

| | | | | |
|---|---|---|---|---|
| *Bei den beidseitig für eine Bedruckung vorgesehenen Aufzeichnungsmaterialien waren die Prüfergebnisse für beide Seiten im Wesentlichen identisch, angegeben ist der Mittelwert für beide Seiten. | | | | |

### Bewertung der Ergebnisse

Es zeigte sich, dass bei Verwendung der erfindungsgemäßen Streichmassen Aufzeichungsmaterialien erhalten werden, die mit elektrofotografischen Druckerverfahren sowohl mit Flüssigtoner als auch mit Trockentoner bedruckbar sind. Die erhaltenen Bilder zeigen ein Silberhalogenidbildern vergleichbares Aussehen und eine vergleichbare Haptik. Die Haftung des Toners an der Oberfläche ist bei den erfindungsgemäßen Aufzeichnungsmaterialien gut, die Blätter verkleben nicht miteinander, laden sich elektrostatisch nicht auf und ergeben einen gleichmäßigen Tonerübertrag bei Verwendung von Trockentonern. Glanzstellen durch Tropfen der in den Tonern als Hilfsstoffe verwendeten Öle werden sicher vermieden.

## Patentansprüche

1. Aufzeichnungsmaterial für elektrofotografische Druckverfahren, enthaltend ein beidseitig mit Kunstharz beschichtetes Rohpapier und mindestens eine auf einer Kunstharzschicht angeordnete toneraufnehmende Schicht, **dadurch gekennzeichnet, dass** die toneraufnehmende Schicht einen wasserlöslichen oder wasserdispergierbaren Binder, ein feinteiliges anorganisches Pigment und eine antistatisch wirkende Komponente enthält, wobei das feinteilige Pigment eine mittlere Teilchengröße von 10 nm bis 200 nm und eine BET-Oberfläche von 10 m²/g bis 400 m²/g aufweist.

2. Aufzeichnungsmaterial gemäß Anspruch 1, **dadurch gekennzeichnet, dass** die Kunstharzschichten ein Polyolefin enthalten.

3. Aufzeichnungsmaterial gemäß Anspruch 2, **dadurch gekennzeichnet, dass** die Kunstharzschichten eine Mischung von Polyethylen mit einer Dichte von größer 0,95 g/cm³ und einem Polyethylen mit einer Dichte von kleiner 0,95 g/cm³ enthalten.

4. Aufzeichnungsmaterial gemäß Anspruch 3, **dadurch gekennzeichnet, dass** ein Polyethylen mit einer Dichte > 0,95 g/m³ in einen Anteil von 60 Gew.-% bis 80 Gew.-%, bezogen auf das Gesamtpolyolefingewicht, in den Kunstharzschichten enthalten ist.

5. Aufzeichnungsmaterial gemäß Anspruch 1, **dadurch gekennzeichnet, dass** die toneraufnehmende Schicht als wasserdispergierbaren Binder ein Ethylenacrylat-Polymer oder Ethylenacrylat-Copolymer enthält.

6. Aufzeichnungsmaterial gemäß Anspruch 1, **dadurch gekennzeichnet, dass** das feinteilige Pigment Aluminiumoxid, Aluminiumoxidhydrat oder Kieselsäure ist.

7. Aufzeichnungsmaterial gemäß Anspruch 1, **dadurch gekennzeichnet, dass** das feinteilige Pigment ein elektrisch leitfähiges Pigment ist.

8. Aufzeichnungsmaterial gemäß Anspruch 7, **dadurch gekennzeichnet, dass** das feinteilige Pigment ein Oxid von Antimon, Indium, Titan, Zink oder Zinn ist oder ein Mischoxid zweier oder mehrerer dieser Elemente.

9. Aufzeichnungsmaterial gemäß Anspruch 1, **dadurch gekennzeichnet, dass** die antistatisch wirkende Komponente ein elektrisch leitfähiges Polymer ist.

10. Aufzeichnungsmaterial gemäß Anspruch 9, **dadurch gekennzeichnet, dass** das elektrisch leitfähige Polymer Polystyrolsulfonsäure ist.

11. Aufzeichnungsmaterial gemäß Anspruch 9, **dadurch gekennzeichnet, dass** das elektrisch leitfähige Polymer ein Polyanilin oder eine Polythiophen ist.

## Claims

1. A recording material for electrophotographic printing methods, comprising a base paper coated with synthetic resin on both sides and at least one toner-receiving layer arranged on a synthetic resin layer, **characterized in that** the toner-receiving layer contains a water-soluble or water-dispersible binder, a finely divided inorganic pigment and an antistatic component, wherein the finely divided pigment has an average particle size of 10nm to 200nm and a BET surface area of 10m²/g to 400m²/g.

2. The recording material according to Claim 1, **characterized in that** the synthetic resin layers contain polyolefin.

3. The recording material according to Claim 2, **characterized in that** the synthetic resin layers contain a mixture of polyethylene with a density of more than 0.95 g/cm³ and a polyethylene with a density of less than 0.95 g/cm³.

4. The recording material according to Claim 3, **characterized in that** a polyethylene with a density of >0.95 g/m³ is present in the synthetic resin layers in an amount of 60% by weight to 80% by weight, based on the total polyolefin weight.

5. The recording material according to Claim 1, **characterized in that** the toner-receiving layer contains an ethylene-acrylate polymer or ethylene-acrylate copolymer as the water-dispersible binder.

6. The recording material according to Claim 1, **characterized in that** the finely particulate pigment is aluminium oxide, aluminium oxide hydrate or silicic acid.

7. The recording material according to Claim 1, **characterized in that** the finely particulate pigment is an electrically conductive pigment.

8. The recording material according to Claim 7, **characterized in that** the finely particulate pigment is an oxide of antimony, indium, titanium, zinc or tin or a mixed oxide of two or more of these elements.

9. The recording material according to Claim 1, **characterized in that** the antistatic component is an electrically conductive polymer.

10. The recording material according to Claim 9, **characterized in that** the electrically conductive polymer is polystyrene sulfonic acid.

11. The recording material according to Claim 9, **characterized in that** the electrically conductive polymer is a polyaniline or a polythiophene.

## Revendications

1. Matériau d'enregistrement pour un procédé d'impression électro-photographique, qui comprend un papier brut, revêtu sur les deux faces de résine synthétique et au moins une couche recevant le toner, qui est disposée sur une couche de résine synthétique, **caractérisé en ce que** la couche recevant le toner contient un liant soluble à l'eau ou dispersible dans l'eau, un pigment anorganique en particules fines et un composant à effet antistatique, sachant que le pigment en particules fines présente une granulométrie de 10 nm à 200 nm et une surface BET de 10 m² / g à 400 m² / g.

2. Matériau d'enregistrement selon la revendication 1, **caractérisé en ce que** les couches de résine synthétiques contiennent une polyoléfine.

3. Matériau d'enregistrement selon la revendication 2, **caractérisé en ce que** les couches de résine synthétique contiennent un mélange de polyéthylène d'une densité supérieure à 0,95 g / cm³ et de polyéthylène d'une densité inférieure à 0,95 g / cm³.

4. Matériau d'enregistrement selon la revendication 3, **caractérisé en ce que** les couches de résine synthétique contiennent un polyéthylène d'une densité > 0, 95 g / cm³, qui représente 60 % à 80 % du poids total de polyoléfine.

5. Matériau d'enregistrement selon la revendication 1, **caractérisé en ce que** la couche recevant le toner contient, en tant que liant dispersible, un polymère d'acrylate d'éthylène ou un copolymère d'acrylate d'éthylène.

6. Matériau d'enregistrement selon la revendication 1, **caractérisé en ce que** le pigment en particules fines est de l'oxyde d' aluminium, de l'hydroxyde d'aluminium ou de l'acide silique.

7. Matériau d'enregistrement selon la revendication 1, **caractérisé en ce que** le pigment en particules fines est un pigment électriquement conducteur.

8. Matériau d'enregistrement selon la revendication 7, **caractérisé en ce que** le pigment en particules fines est un oxyde d'antimoine, indium, titane, zinc ou étain ou un oxyde mixte de deux ou de plusieurs de ces éléments.

9. Matériau d'enregistrement selon la revendication 1, **caractérisé en ce que** le composant à effet antistatique est un polymère électriquement conducteur.

10. Matériau d'enregistrement selon la revendication 9, **caractérisé en ce que** le polymère électriquement conducteur consiste en acide sulfonique polystyrénique.

11. Matériau d'enregistrement selon la revendication 9, **caractérisé en ce que** le polymère électriquement conducteur consiste en polyaniline ou en polythiophène.
